(19) Europäisches Patentamt / European Patent Office / Office européen des brevets

(11) **EP 4 502 892 A1**

(12) **EUROPÄISCHE PATENTANMELDUNG**

(43) Veröffentlichungstag:
05.02.2025 Patentblatt 2025/06

(21) Anmeldenummer: 23188978.3

(22) Anmeldetag: **01.08.2023**

(51) Internationale Patentklassifikation (IPC):
$G06Q\ 10/0631^{(2023.01)}$ $\quad G06Q\ 50/06^{(2024.01)}$
$G06Q\ 50/16^{(2024.01)}$ $\quad F24F\ 11/46^{(2018.01)}$
$G06Q\ 30/0201^{(2023.01)}$ $\quad G05B\ 19/00^{(2006.01)}$

(52) Gemeinsame Patentklassifikation (CPC):
**G06Q 50/06; G06Q 10/04; G06Q 10/0631;**
**G06Q 50/163;** G05B 15/02; G06Q 30/0206

(84) Benannte Vertragsstaaten:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Benannte Erstreckungsstaaten:
**BA**
Benannte Validierungsstaaten:
**KH MA MD TN**

(71) Anmelder: **Siemens Schweiz AG**
**8047 Zürich (CH)**

(72) Erfinder:
• **Amthor, Arvid**
**98631 Grabfeld OT Nordheim (DE)**

• **Schreck, Sebastian**
**90429 Nürnberg (DE)**
• **Schütz, Thomas**
**90765 Fürth (DE)**
• **Sudhoff, Robin**
**91052 Erlangen (DE)**
• **Zupan, Nejc**
**80337 München (DE)**

(74) Vertreter: **Siemens Patent Attorneys**
**Postfach 22 16 34**
**80506 München (DE)**

(54) **OPTIMIERUNG EINER GEBÄUDENUTZUNG**

(57) Die Erfindung betrifft ein Verfahren zur Erstellung eines zeitlichen Nutzungsplans für ein Gebäude oder Teile eines Gebäudes um dessen Betrieb im Hinblick auf Kosten, $CO_2$-Emissionen, Nutzerpräferenzen von Arbeitgeber und Arbeitnehmer zu optimieren.

## FIG 1

EP 4 502 892 A1

**Beschreibung**

Die Erfindung betrifft ein Verfahren zur Erstellung eines zeitlichen Nutzungsplans für ein Gebäude oder Teile eines Gebäudes gemäß Anspruch 1, sowie ein Computer-Programm-Produkt dafür, einen Computer und ein auslesbares elektronisches Speichermedium gemäß der Ansprüche 15, 16 und 17.

Stand der Technik

In Zeiten steigender Energiepreise und dem Ziel $CO_2$-Emissionen zu reduzieren wird der effiziente und nachhaltige Betrieb von Gebäuden oder Teilen eines Gebäudes, wie z.B. Bürogebäude, Privathaushalte, immer wichtiger.
Auch der Gesetzgeber hat dies erkannt und fordert mittlerweile beim Kauf oder einer Sanierung von Ein- oder Zweifamilienhäusern verpflichtend eine Energieberatung zur Verbesserung des Energiehaushalts des Gebäudes.

Aufgabe

Aufgabe der Erfindung ist es nun, zumindest eine Möglichkeit aufzuzeigen, mittels der eine weitere Optimierung des Betriebs eines Gebäudes oder eines Teils eines Gebäudes bewirkt werden kann.
Die Lösung dieser Aufgabe erfolgt durch die Merkmale der unabhängigen Ansprüche 1, 15, 16 und 17. In den abhängigen Ansprüchen werden vorteilhafte und zweckmäßige Weiterbildungen angegeben.
Die zunehmende Möglichkeit des Arbeitens von einem anderen Ort aus als im angestammten Büro eröffnet einen Entscheidungsspielraum für einen optimalen Betrieb von Wohn- und Bürogebäuden, im Hinblick auf Energieverbrauch und/oder Kosten und/oder $CO_2$-Emissionen.
So kann es z.B. vorteilhaft sein, die Belegung von Bürogebäuden in Abhängigkeit von kurzfristigen Änderungen, z.B. eine Woche im Voraus, der Energiepreise, der Wetterbedingungen, der Arbeitgeberpräferenzen und der Arbeitnehmerpräferenzen zu planen. Die ständige Nutzung des Bürogebäudes mit nur wenigen Mitarbeitern könnte aufgrund der Kosten für Beleuchtung, Heizung und Kühlung ineffizient sein. Es könnte effizienter sein, weniger Bürotage, z.B. pro Woche, einzuplanen, um eine hohe Auslastung zu erreichen, z. B. an Tagen mit hoher Eigenerzeugung (z. B. PV-Erzeugung auf dem Dach des Bürogebäudes), und Tage ohne jegliche Auslastung einzuplanen.
Die Bestimmung der optimalen Gebäudenutzung ist dementsprechend eine anspruchsvolle Aufgabe, zu deren Lösung so viele Faktoren berücksichtigt werden sollten wie möglich, u.a. folgende:

-    Präferenzen des Arbeitgebers;
     z.B. Mindestanzahl von Arbeitstagen und/oder Arbeitnehmer im Büro,
-    Präferenzen der Arbeitnehmer;
     z.B. bestimmte Arbeitstage im Büro,
-    Energiepreise im Energiesystem des Arbeitgebers,
-    ggf. Energiepreise im Energiesystem des Arbeitnehmers,
-    $CO_2$-Emissionen im Energiemix, $CO_2$-Emissionen des Arbeitgebers und ggf. im Energiesystem des Arbeitnehmers,
-    Netzauslastung, insbesondere von Energielieferanten,
-    Last, also der Bezug von Energie, Erzeugung von Energie in beiden Energiesystemen, ....

Dementsprechend betrifft die Erfindung gemäß eines ersten Aspektes ein Verfahren zur Erstellung eines zeitlichen Nutzungsplans für Gebäude oder Teile eines Gebäudes unter Berücksichtigung mindestens eines vorgebbaren Parameters aus der Menge:

-    Minimierung der Kosten für Energie,
     wie Elektrische Energie, Gas, Öl, Fernwärme,
-    Festlegung eines zu betrachtenden Zeitraums,
     wie Wochentag, Vormittag, Nachmittag, Mittagszeit oder Zeiteinheit in Stunden oder Teilen davon,
-    Berücksichtigung des für den zu betrachtenden Zeitraum aktuell gültigen oder vorhergesagten Handelspreises für wenigstens eine der Arten von Energie,
-    Maximierung des erzielbaren Ertrags aus eigener Einspeisung von Energie in ein Energienetz eines Energieversorgers,
-    Berücksichtigung der für den zu betrachtenden Zeitraum zu erwartenden Wetterbedingungen,
-    Optimierung der Nutzung mindestens eines der Energienetze der Energieversorger,
-    Minimierung von $CO_2$-Emissionen,
-    zeitliche Nutzungspräferenzen 13 des Arbeitgebers 13.1 in dem Falle, dass das Gebäude 100 oder der Teil des Gebäudes 100 ein Büro oder dgl. Firmengebäude ist,

- zeitliche Nutzungspräferenzen 14 mindestens eines der Arbeitnehmer 14.1 in dem Falle, dass das Gebäude 100 oder der Teil des Gebäudes 100 ein Büro oder dgl. Firmengebäude ist,
- zeitliche Nutzungspräferenzen 15 des mindestens einen Arbeitnehmers 14.1 in dem Falle, dass das Gebäude 200 oder der Teil des Gebäudes 200 dessen Wohnort ist,
- Auslastung mindestens eines Energienetzes 16,
  wobei das Verfahren wenigstens einzelne der folgenden Verfahrensschritte beinhaltet:
- Ermittlung der Nutzungsart des Gebäudes,
  wie zum Beispiel Bürogebäude oder dgl. Firmengebäude oder Wohnort eines Arbeitnehmers mit Heimarbeitsplatz,
- Ermittlung der im betreffenden Gebäude vorhandenen oder zu diesem gehörenden Energiesenken, Energiequellen, Energiespeicher und Energiekonverter,
- Ermittlung der üblichen Zeiträume von Nutzung und Nichtnutzung des Gebäudes oder Teilen des Gebäudes,
- Ermittlung von möglichen zusätzlichen Zeiträumen einer wenigstens teilweisen Nichtnutzung des Gebäudes oder Teil des Gebäudes,
- Ermittlung von Zeiträumen für eine mögliche alternative Nutzung wenigstens von Teilen des Gebäudes, wie zu Beispiel Vermietung,
- Ermittlung des Bedarfs und/oder der möglichen Generierung von Energie für zumindest jene Energiesenken und/oder Energiequellen, die als primär erforderlich für eine übliche Nutzung des Gebäudes oder des Teils des Gebäudes für den zu betrachtenden Zeitraum erachtet werden,
- Ermittlung der Menge an Energie, welche durch Speicherung mittels der eigenen Energiespeicher für einen separaten, diesbezüglich festlegbaren zweiten Zeitraum generiert werden kann,
- Ermittlung der $CO_2$-Emission für das Gebäude oder den Teil des Gebäudes für den zu betrachtenden ersten Zeitraum,
- Ermittlung der Kosten für den Bedarf an Energie und/oder die $CO_2$-Emission für den zu betrachtenden ersten Zeitraum,
- Splitten der Kosten für den Bedarf an Energie und/oder die $CO_2$-Emission in fixe Kosten und variable Kosten,
- Optimierung der Nutzung des Gebäudes oder Teile des Gebäudes im Hinblick auf wenigstens einen der Parameter.

Mittels einem solchen Verfahren kann eine Bündelung/Konzentrierung von Zeiten der Nutzung und Nichtnutzug des Gebäudes oder des Teils des Gebäudes auf bestimmte Zeiten ermittelt werden.

Auch wenn es sich anbietet, die Verfahrensschritte in der angegebenen Reihenfolge durchzuführen, so ist deren Einhaltung weder zwingend erforderlich, noch müssen jeweils alle Verfahrensschritte durchgeführt werden. Ganz im Gegenteil dazu bietet eine Variierung und/oder wiederholte Durchführung mit unterschiedlichen Verfahrensschritten oder Kombinationen von Verfahrensschritten den Vorteil die Optimierung der Gebäudenutzung unter unterschiedlichen Aspekten und Gewichtungen von Sachverhalten zu betrachten, wie nachfolgend noch näher beschrieben.

Das heißt, das Verfahren kann prinzipiell erst einmal ausgehend von der Verwendung z.B. nur eines ersten Parameters zu einer groben Bestimmung erster Eckdaten eines sich daraus ergebenden Ergebnisses durchgeführt und/oder eingeleitet werden.

Zur Verfeinerung eines z.B. mit nur einem Parameter erzielten Ergebnisses kann das Verfahren unter Berücksichtigung mindestens eines weiteren Parameters erneut durchgeführt werden.

Um rascher zu einem etwas aussagekräftigeren und/oder verfeinerten Ergebnis zu gelangen kann das Verfahren auch unter gleichzeitiger Verwendung mehrerer dieser Parameter durchgeführt werden.

Die Wahl der zu verwendenden Parameter und/oder Kombinationen von Parametern kann dabei von unterschiedlichen Aspekten gelenkt werden. Je nachdem welche Schwerpunkte für eine Optimierung der Nutzung und/oder des Betriebs des Gebäudes von Interesse und/oder zu berücksichtigen gewünscht sind können beispielsweise die $CO_2$-Emmission, die Wetterbedingungen, bestimmte Kosten, wie z.B. der zeitaktuell exakte Preis für eine bestimmte Energieform, die Aufteilung von Kosten in fixe und variable Kostenanteile, die Nutzung der Nichtnutzung des Gebäudes oder Teil des Gebäudes an bestimmten Tagen und/oder dergleichen mehr mit berücksichtigt werden oder vorerst auch unberücksichtigt bleiben. Dies gilt sowohl für eine erste Durchführung des Verfahrens als auch für dessen ggf. erneute Durchführung oder Durchführungen.

Das Verfahren stellt somit ein Werkzeug bereit, mittels dem verschiedene Szenarien, auch in unterschiedlicher Komplexität, für den Betrieb eines Gebäudes oder Teil eines Gebäudes unter unterschiedlichen Nutzungsbedingungen und deren jeweilige Auswirkungen untersucht werden können.

Für die Zeiten der so ermittelten Nichtnutzung können dann Schritte für die Reduzierung von Energieverbrauch, von Betriebskosten und $CO_2$-Emission ermittelt werden. Letztere können insbesondere unter Berücksichtigung von Nutzungspräferenzen des Arbeitgebers und des mindestens einen Arbeitnehmers gewichtet erfolgen.

Bei der Energie die in das Energienetz eines Energieversorgers eingespeist wird, kann es sich um solche Energie handeln, die entweder mittels eigener Energiequellen erzeugt werden kann und/oder um Energie, die in einem eigenen Energiespeicher gespeichert ist. Damit kann z.B. in Zeiten hoher Energiepreise, z. B. in Spitzenlastzeiten, durch eine solche eigene Einspeisung in das Energienetz eines Energieversorgers ein entsprechend hoher wirtschaftlicher Ertrag generiert werden.

Bei gespeicherter Energie kann es sich um solche Energie handeln, die zu einem früheren Zeitraum entweder durch eine eigene Energiequelle erzeugt wurde und/oder um solche Energie die ggf. zuvor aus einem betreffenden Energienetz bezogen wurde. Vorzugsweise erfolgt ein solcher Energiebezug zur Zwischenspeicherung in einem eigenen Energiespeicher zu einer Zeit mit Niedrigpreis, wie z.B. in Zeiten schwacher Netzauslastung.

Der Differenzbetrag zwischen Einkauf und Verkauf bzw. zwischen Bezug und Einspeisung wirkt sich wirtschaftlich entsprechen positiv für die eigene Kostenrechnung aus.

Ein weiterer positiver Effekt eines derart kontrollierten Energieflusses zwischen Bezug und Einspeisung betrifft den Optimierungseffekt für eine möglichst gleichmäßige Belastung das betreffende Energienetz des jeweiligen Energieversorgers. Denn in Niederlastzeiten muss dessen Einspeisung dadurch nicht so drastisch reduziert werden und in Zeiten von insbesondere kurzzeitigen Spitzenlasten, wie dies u.a. beim Anlaufen von Motoren der Fall ist, muss die Einspeisung durch den Versorger nicht so sprungartig erhöht werden.

Entsprechendes gilt für die Belastung und Auslastung der Netzleitungen. Im Idealfall kann in dem Bereich des Energienetzes, in welchem vorübergehend ein hoher Bedarf an Energie ansteht zumindest ein Teil dieses Bedarfs eingespeist werden, so dass dieser Energieanteil nicht durch das übrige Energienetz fließen und diese dementsprechend belasten muss.

Unter den zu erwartenden Wetterbedingungen sind jene gemeint, die auf der Basis einer kurz-, mittel- oder langfristigen Wettervorhersage und/oder einem Mix daraus angenommen werden.

Zur Minimierung von $CO_2$-Emissionen kann der Ansatz zugrunde gelegt werden, die Nutzung fossiler Energiequellen so weit wie möglich zu reduzieren, insbesondere die Nutzung eigener fossiler Energiequellen und durch die Nutzung alternativer Energiequellen zu ersetzen. Auch hierfür können eigene Energiespeicher vorteilhaft genutzt werden, indem darin jene Energie gespeichert wird, die z.B. in Zeiten in denen eigene emissionsfreie Energiequellen mehr Energie liefern als verbraucht wird.

Eigene emissionsfreie Energiequellen können z.B. sein: aus Sonnenlicht, Wind- und/oder Wasserkraft elektrische Energie erzeugende Anlagen, aus der Umgebung und/oder aus dafür vorgesehenen Kollektoren und/oder Speichern Wärme und/oder Kälte gewinnende Anlagen und dergleichen mehr.

Unter Energiesenken werden allgemein Verbraucher von Energie verstanden, sowohl elektrische als auch solche zum Heizen und/oder Kühlen. Für Energiequellen, Energiespeicher und Energiekonverter gilt entsprechend deren allgemein fachübliche Definition hierfür.

Zeitliche Nutzungspräferenzen des Arbeitgebers und/oder des mindestens einen der Arbeitnehmer können sein: eine Mindestanzahl an Arbeitnehmern, die üblicherweise anwesend sind, bestimmte Zeiten oder Zeitfenster in denen die Arbeitnehmer anwesend sein sollen oder möchten, wie z.B. vormittags, nachmittags, abends, bestimmte Wochentage oder bevorzugt an welchen Tagen der Woche und dgl. mehr.

Unter einem separaten, diesbezüglich festlegbaren zweiten Zeitraum sind neben der üblichen Nutzungszeiten z.B. auch Zeiten gemeint, in denen keine oder eine geringere Nutzung des Gebäudes stattfindet, wie z.B. nach Arbeitsschluss, am Wochenende und an Feiertagen. In diesen Zeiten kann unabhängig von der Nutzung des Gebäudes trotzdem entsprechend Energie generiert und in den betreffenden Energiespeichern gespeichert werden.

Gemäß einem weiter gefassten Aspekt kann die Nutzung des Gebäudes oder Teile des Gebäudes unter Einbeziehung wenigstens eines weiteren zeitlichen Nutzungsplans für wenigstens ein weiteres Gebäude oder Teile wenigstens eines weiteren Gebäudes optimiert werden.

Bei diesem weiteren Gebäude oder Teil eines Gebäudes kann es sich z.B. um ein Büro oder einen Wohnort eines Arbeitnehmers mit Heimarbeitsplatz handeln, oder um beides.

Damit können der Bedarf und die Möglichkeiten von Bezug und Einspeisung von Energie für das erste Gebäude oder Teile des ersten Gebäudes und für das zweite zu berücksichtigende Gebäude oder Teile dieses Gebäudes in einem ersten Schritt miteinander verknüpft werden.

Zusätzlich zur Einbeziehung dieses zeitlichen Nutzungsplans für ein weiteres Gebäude oder Teil eines Gebäudes können noch zusätzliche Nutzungspläne für weitere Gebäude oder Teil(e) weiterer Gebäude in das Verfahren einbezogen werden. Das heißt z.B., je nach dem wie viele Mitarbeiter in dem betrieblich genutzten Gebäude oder Teil eines Gebäudes beschäftigt sind, können von einem bis hin zu allen Mitarbeitern zusätzliche Nutzungspläne für deren Gebäude oder Teile eines Gebäudes berücksichtigt werden.

In einem weiteren Schritt können z.B. beide Gebäude betreffende Optimierungen bzgl. Energiebilanz, Kosten, $CO_2$-Verbrauch, Präferenzen von Arbeitgebern und/oder Arbeitnehmern und dgl. mehr erarbeitet werden.

Bei der Durchführung des Verfahrens können auch Messungen der Energiesysteme betreffend des Gebäudes oder Teilen des Gebäudes von Arbeitgebern und/oder Arbeitnehmern erfasst werden, z. B. Wirkleistung von Lasten, Erzeugung, sowie Energiesystemparameter, wie z. B. welche Anlagen installiert sind, maximale Speicherkapazität. Diese energiesystembezogenen Informationen können mit den Präferenzen der Arbeitnehmer (z. B. wie viele Tage pro Woche im Büro) und den Energiepreisen der Arbeitnehmer (z. B. Tarife der Energieversorger) kombiniert werden. In ähnlicher Weise können auch die Präferenzen des Arbeitgebers (z. B. wie viele Tage pro Woche im Büro) und die Rohstoffkosten berücksichtigt werden. Diese Informationen können mit Informationen von Dritten wie Wettervorhersagen und Energiemarktpreisprognosen (z. B. Day-Ahead-Markt) sowie Prognosen zu CO2-Emissionen im Energiemix kombiniert werden.

Um eine Mengenermittlung zur Veranschlagung von Verbrauch, Generierung, Speicherung von Energie zu ermöglichen kann es gemäß einem nächsten Verfahrensschritt vorgesehen sein, dass die messbaren Parameter des Gebäudes oder des Teils des Gebäudes über einen mit dem zu betrachtenden Zeitraum vergleichbaren Zeitraum gemessen und abrufbar bereitgestellt werden.

Gemäß einem weiteren Verfahrensschritt können die messbaren Parameter des Gebäudes oder des Teils des Gebäudes in dem zu betrachtenden Zeitraum gemessen und abrufbar bereitgestellt werden. Damit kann eine Mengenermittlung des tatsächlichen Verbrauchs, Generierung, Speicherung von Energie möglich werden.

Um z.B. Preise zur Kosten- und/oder Wertermittlung in Erfahrung bringen zu können, können im Weiteren die gemessenen und/oder bereitgestellten Parameter mit ihnen zugeordneten Faktoren verknüpft werden.

Um auch unterschiedliche Preise über den Tag/die Woche, Spitzen- und Niederlastzeiten berücksichtigen zu können, können die Faktoren für unterschiedliche zu betrachtende Zeiträume für eine verfeinerte Optimierung der Nutzung eines Gebäudes oder eines Teils eines Gebäudes differenziert berücksichtigt werden.

Im Hinblick auf wirtschaftliche und/oder technische Aspekte, wie z. B. günstiger Einkauf von Energie und gleichmäßigere Netzbelastung, wofür ggf. vom Netzbetreiber zusätzlich eine Vergütung generiert werden kann, kann aus dem Energienetz des betreffenden Energieversorgers zu Niedrigpreiszeiten und/oder Niederlastzeiten Energie zur Aufladung eigener Energiespeicher bezogen werden.

Um eine möglichst hohe Rendite zu erwirtschaften kann umgekehrt, bezogen auf das Energienetz des betreffenden Energieversorgers, zu Hochpreiszeiten und/oder Spitzenlastzeiten überschüssige Energie aus den eigenen Speichern in das Energienetz eingespeist werden.

In einem weiteren Schritt kann das Verfahren zur Optimierung der Nutzung des Gebäudes oder Teile des Gebäudes als eine Zielfunktion eines Rechenalgorithmus berechnet werden, welcher gemischte Integer-Linearfunktionen umfasst.

Dies hat den Vorteil, dass die Optimierung der Nutzung eines Gebäudes oder Teil eines Gebäudes automatisiert durchgeführt werden kann. Z. B. kann die erforderliche Rechenleistung von einem Computer erbracht werden.

Dies wird insbesondere augenscheinlich bei der Vielzahl an zu berücksichtigenden, oben beispielhaft aber nicht abschließend angegebenen Parametern und Faktoren, wie sie für die Durchführung des Verfahrens zur Erstellung eines zeitlichen Nutzungsplans für Gebäude oder Teile eines Gebäudes erforderlich sind.

Zumindest zu berücksichtigen bei der Durchführung des Verfahrens sind Datensätze:

- Berücksichtigte Tage d $\in D$,
- Berücksichtigte Zeitabschnitte $t \in T$,
- Berücksichtigte Arbeitnehmer e $\in E$,
- Berücksichtigte Energierohstoffe c $\in C$,
- Berücksichtigte Energiesenken/Lasten $load \in LOADS$,
- Berücksichtigte Energiekonverter $con \in CONS$,
- Berücksichtigte Energiequellen $gen \in GENS$,
- Berücksichtigte Energiespeicher st $\in ST$,

Zur Vereinfachung wird die Zielfunktion hier beispielhaft als eine Kostenminimierung geschrieben. Diese kann zu einem Mehrzielproblem erweitert werden, das z. B. die Minimierung der CO2-Emissionen oder andere der oben angegebenen Parameter einschließt.

$$\min\left(\sum_{e \in E} [costs_e^{home}] + costs^{office}\right),$$

Mit $costs_e$ als die Energiekosten eines Mitarbeiters und $costs^{office}$ als die Energiekosten des Büros. Beide Kostenkomponenten können in einen fixen und einen variablen Teil unter Berücksichtigung von unflexiblem und flexiblem Verbrauch und Erzeugung von Energie aufgeteilt werden. Der fixe Teil des Energiesystems des Arbeitgebers repräsentiert z.B. die Grundlast des Systems (z.B. ständig laufende Server, minimaler Wärmebedarf, ...) der variable Teil repräsentiert die flexible Last/den flexiblen Energieverbrauch (z.B. Beleuchtungsbedarf, EV-Ladebedarf) und die flexiblen Einnahmen (z.B. wie viel Energie ins Energienetz eingespeist wird). Der flexible Teil hängt von der Auslastung des Gebäudes ab, z. B. wie viele Arbeitgeber sich an einem bestimmten Tag im Gebäude aufhalten.

$$costs^{office} = \sum_{d}^{D} \sum_{t}^{T(d)} \sum_{c}^{C} \Delta t \left( \lambda_{c,t}^{buy} P_{t,c}^{buy} - \lambda_{c,t}^{sell} P_{t,c}^{sell} \right)$$

$$costs_{e}^{home} = \sum_{d}^{D} \sum_{t}^{T(d)} \sum_{c}^{C} \Delta t \left( \lambda_{c,t,e}^{buy} P_{t,c,e}^{buy} - \lambda_{c,t,e}^{sell} P_{t,c,e}^{sell} \right)$$

mit

$$\lambda_{c,t}^{buy}$$

und

$$\lambda_{c,t}^{sell}$$

als die Kosten/Erlöse für den Kauf bzw. Verkauf der elektrischen Energie

$$P_{t,c}^{buy}, P_{t,c}^{sell}$$

pro Zeitschritt $t$ und der Handelswert der Energie (commodity) c vom/zum Energienetz (z. B. einem Energieversorger).

In Bezug auf eine Optimierung der Nutzung eines arbeitgeberseitigen Gebäudes kann vorgesehen sein, dass für die Ermittlung des Bedarf an Energie für das Gebäude oder Teile des Gebäudes, im dem Fall, dass dieses ein Büro oder dgl. Firmengebäude ist, für jeden zu betrachtenden Zeitraum und für jede Art von zu berücksichtigender Energie folgende Gleichung zugrundegelegt wird:

$$P_{t,c}^{buy} + \sum_{gen}^{GENS} P_{t,c,gen}^{gen} + \sum_{st}^{ST} P_{t,c,st}^{dch} + \sum_{con}^{CONS} P_{t,c,con}^{Y \to c}$$
$$= P_{t,c}^{sell} + \sum_{gen}^{ST} P_{t,c,st}^{ch} + \sum_{load}^{Load} \left( P_{t,c,load}^{load.fix} + \sum_{e}^{E} \mu_{e,d} P_{t,c,load}^{load.flex} \right)$$
$$+ \sum_{con}^{CONS} P_{t,c,con}^{c \to Y}, \forall\, d\ in\ D, t\ in\ T(d), c\ in\ C,$$

Mit:

o $\mu_{e,d}$ als binäre Entscheidungsvariable des Mitarbeiters e, am Tag d im Büro (1) oder zu Hause (0) zu sein.

o $P_{t,c,load}^{load.flex}$ als flexible Last (Energiebezug), die der Gleichung hinzugefügt wird, wenn ein Mitarbeiter im Büro ist.

o $P_{t,c,load}^{load.fix}$ als unflexible Grundlast des Büros.

o $P_{t,c,load}^{load.flex}$ könnte eine Konstante sein, die für jeden Mitarbeiter im Büro addiert wird. Diese Konstante könnte jedoch auch als variabel spezifiziert werden, z. B. mit einer stufenweisen Funktion modelliert werden. Auf diese Weise ließe sich z. B. der zusätzliche Heizbedarf modellieren, der entsteht, wenn eine bestimmte Anzahl von Mitarbeitern erreicht wird und ein zusätzliches Stockwerk beheizt werden muss.

- $P_{t,c,st}^{dch}, P_{t,c,st}^{ch}$ , sind Entlade- und Ladegrößen eines Energiespeichers.

- $P_{t,c,con}^{Y \to c}$ als Ausgang eines Energiekonverters für den Handelswert der Energie (commodity) c zum Zeitschritt t,

- $P_{t,c,con}^{c \to Y}$ als Eingang eines Konverters für den Handelswert der Energie (commodity) c zum Zeitschritt t.

- $P_{t,c,gen}^{gen}$ steht für die Erzeugung der Energie vor Ort.

Damit kann, wenn für jeden Zeitschritt und jeden Handelswert der Energie (commodity) für den diese Bilanzgleichung erfüllt ist, der zu deckende Bedarf des Büros/Gebäudes oder Teil des Gebäudes ermittelt werden.

In Bezug auf eine Optimierung der Nutzung eines arbeitnehmerseitigen Gebäudes oder Teil eines solchen Gebäudes kann es vorgesehen sein, dass für die Ermittlung des Bedarf an Energie für das Gebäude oder den Teil des Gebäudes, im dem Fall, dass dieses ein Wohnort eines Arbeitnehmers mit Heimarbeitsplatz ist, für jeden zu betrachtenden Zeitraum und für jede Art von zu berücksichtigender Energie folgende Gleichung zugrundegelegt wird:

$$
P_{t,c,e}^{buy} + \sum_{gen}^{GENS(e)} P_{t,c,gen}^{gen} + \sum_{st}^{ST(e)} P_{t,c,st}^{dch} + \sum_{con}^{CONS(e)} P_{t,c,con}^{Y \to c}
$$

$$
= P_{t,c,e}^{sell} + \sum_{st}^{ST(e)} P_{t,c,st}^{ch} + \sum_{load}^{LOADS(e)} (P_{t,c,load}^{load.fix} + (1 - \mu_{e,d}) P_{t,c,load}^{load.flex})
$$

$$
+ \sum_{con}^{CONS(e)} P_{t,c,con}^{c \to Y}, \forall\, e\, in\, E, d\, in\, D, t\, in\, T(d), c\, in\, C.
$$

Damit kann der Bedarf an Energie für den Wohnort des betreffenden Arbeitnehmers mit Heimarbeitsplatz in einem ersten Schritt quantifiziert werden. In einem weiteren Schritt kann dann diese Quantifizierung mit dem wie zuvor beschrieben quantifizierten Bedarf an Energie für das betrieblich genutzte Gebäude (Büro) verknüpft werden.

Es ist zu beachten, dass die zusätzliche flexible Last / Bedarf an Energie

$$
P_{t,c,load}^{load.flex},
$$

in diesem Fall z. B. für die Beheizung des Hauses auf Komfortniveau, Energie zum Kochen usw., nur angesetzt wird, wenn der Arbeitnehmer an diesem Tag von zu Hause aus arbeitet, d. h. wenn $(1 - \mu_{e,d})$ den Wert 1 hat.

Zusätzlich können auch andere und/oder weitere Regeln angewandt werden, um z. B. die optimalen Tage innerhalb einer Woche, die als D Tage in (*D1...D7*) definiert ist, für den mindestens einen Mitarbeiter auszuwählen, an denen dieser ins Büro geht. Wenn der Arbeitnehmer z. B. beschließt, an mindestens einer bestimmten Anzahl von Tagen

$$
D_e^{min}
$$

Tagen pro Woche im Büro zu arbeiten, kann hierfür folgende Gleichung zugrundegelegt werden.

$$
D_e^{min} \leq \sum_d^D \mu_{e,d}, \forall\, e\, in\, E,
$$

Alternativ könnten diese Mindesttage auch vom Arbeitgeber festgelegt werden. Oder es könnte ein optimaler "Teamtag" auf der Grundlage der Präferenzen mehrerer Arbeitnehmer festgelegt werden.

Gemäß eines weiteren Optimierungsansatzes kann vorgesehen sein, für die Speicherung von Energie folgende Bedingung zugrundegelegt wird:

$$\frac{C}{\Delta t} \cdot \left(SoC_{t,st,c} - SoC_{t-1,st,c}\right) = \eta_{charge,st,c} \cdot P^{ch}_{t,c,st} - \frac{P^{dch}_{t,c,st}}{\eta_{discharge,st,c}}, \quad \forall\, t \in T, st\, in\, ST, c\, in\, C$$

$$SoC_{min,st,c} \le SoC_{t,st,c} \le SoC_{max,st,c} \quad \forall\, t \in T, st\, in\, ST, c\, in\, C$$

$$P_{min,st,c} \le P^{ch}_{t,c,st} \le \alpha_t \cdot P_{max,st,c} \quad \forall\, t \in T, st\, in\, ST, c\, in\, C$$

$$P_{min,st,c} \le P^{dch}_{t,c,st} \le \alpha_t \cdot P_{max,st,c} \quad \forall\, t \in T, st\, in\, ST, c\, in\, C$$

Mit:

$P^{charge}_t, P^{discharge}_t$ : *Einspeisung oder Entnahme von Energie zum Zeitpunkt t [kW]*

$P_{min}, P_{max}$: *min., max. Energie / Power [kW]*

$SoC_t$: *Ladestatus zum Zeitpunkt t [%]*

$SoC_{min}, SoC_{max}$ : *min / max (Ladestatus) [%]*

$\eta_{charge}\, \eta_{discharge}$ : *Lade- Entladeeffizienz [%]*

$C$ : *Speicherkapazität [kWh]*

$\alpha_t$: *Verfügbarkeit [0;1]*

Für eine Konvertierung von Energie kann folgende Bedingung zugrundegelegt werden:

$$P^{c \to Y}_{t,c,con} = \eta_t \cdot P^{Y \to c}_{t,c,con}, \quad \forall\, t \in T, c\, in\, C, conv\, in\, CONVS$$

$$P_{min} \le P^{Y \to c}_{t,c,con} \le P_{max}, \quad \forall\, t \in T.$$

Mit:

$P^{Y \to c}_{t,c,con}, P^{c \to Y}_{t,c,con}$ : *Eingang und Ausgang an Energie am Konverter zum Zeitpunkt t [kW]*

$\eta_t$ : *Effizienz/Koeffizient der Leistung [%]*

$P_{min,con}, P_{max,con}$ : *minimax der Leistung des Konverters [kW]*

Damit kann die Konvertierung von Energie an dem betreffenden Energiekonverter quantifiziert werden. Dies gilt sowohl für das betrieblich genutzte als auch für das von den mindestens einen Arbeitnehmer genutzte Gebäude oder Teil eines solchen Gebäudes.

Die Erfindung betrifft im Weiteren ein Computer-Programm-Produkt. Dieses zeichnet sich dadurch aus, dass es dazu programmiert ist, bei seinem Ablauf auf einem Computer ein Verfahren zur Erstellung eines zeitlichen Nutzungsplans für Gebäude oder Teile eines Gebäudes durchzuführen.

Die Erfindung betrifft auch einen Computer, umfassend eine Hardware und darauf laufende Software, wobei auf dem Computer ein Computer-Programm-Produkt zur Durchführung eines Verfahrens zur Erstellung eines zeitlichen Nutzungsplans für Gebäude oder Teile eines Gebäudes lauffähig implementiert ist.

Des Weiteren betrifft die Erfindung auch ein auslesbares elektronisches Speichermedium, in dem ein Computer-Programm-Produkt zur Durchführung eines Verfahrens zur Erstellung eines zeitlichen Nutzungsplans für Gebäude oder Teile eines Gebäudes gespeichert ist.

Unter auslesbares elektronisches Speichermedium werden alle elektronischen Speichermedien verstanden, wie Magnetbänder, CDs, DVDs, Speichersticks wie z.B. USB-Sticks, Festplatten, Server, Cloud basierte Speichermöglichkeiten, etc.

Der Ansatz zur Optimierung der Nutzung eines Gebäudes oder Teil eines Gebäudes kann noch weiter ausgebaut werden, z.B.:

- Mehrere Bürogebäude auf Seiten des Arbeitgebers,
- Stückweise Verringerung des Verbrauchs an elektrischer Energie, z. B. Nutzung und Beheizung einer ganzen Etage anstelle der Verteilung der Mitarbeiter auf mehrere Etagen,

- Berücksichtigung der Auswirkungen auf das Netz für elektrische Energie / Stromnetz, z. B. Minimierung der voraussichtlichen Energiespitzen/Stromspitzen auf der Ebene des Bürogebäudes,
- Einbeziehung der Entfernung jedes Mitarbeiters zum Büro und des jeweils erforderlichen Mobilitätsbedarfs, z. B. der Ladeenergie eines Elektrofahrzeugs, in das Optimierungsproblem,
- Einbeziehung der CO2-Emissionen in die Zielfunktion-Mehrzieloptimierung,
- Dynamische Begrenzung der verfügbaren Büroplätze (z.B. pro Tag) basierend auf den Optimierungsergebnissen.

Der in dieser Erfindung beschriebene Ansatz bietet folgende Vorteile:

- Vermeidung von "verschwendeter" Energie durch z.B. Beheizung eines unbesetzten Bürogebäudes.
- Erhöhung des Eigenverbrauchs der Vor-Ort-Erzeugung von großen Gebäuden.
- Ressourceneffiziente Planung der Bürobelegung.
- Je nach Zielsetzung: Nutzung ungenutzter Bürogebäude zur Erbringung von Nebendienstleistungen, CO2-Reduktion, ....
- Minimierung der Energiekosten von Bürogebäuden und Mitarbeiterwohnungen.

Figurenbeschreibung

Nachfolgend wir die Erfindung unter Bezugnehme auf die Figuren näher beschrieben.

Es zeigen:

Figur 1:        Symbolisch einen Computer, ein Computer-Programm-Produkt und einen beispielhaft visualisierten, nicht vollständig abschließend dargestellten Pool verschiedener Parameter für das Computer-Programm-Produkt.

Figur 2:        Ebenfalls beispielhaft und symbolisch ein Gebäude oder einen Teil eines Gebäudes und die Darstellung eines diesbezüglichen Energieflussschemas.

Figur 3:        Wiederum beispielhaft und symbolisch ein weiteres Gebäude oder einen Teil eines weiteren Gebäudes und die Darstellung eines diesbezüglichen Energieflussschemas.

Figuren 4 - 8:        Mathematische Formeln zur Durchführung von Verfahrensschritten eines Verfahrens zur Erstellung eines Nutzungsplans für ein Gebäude.

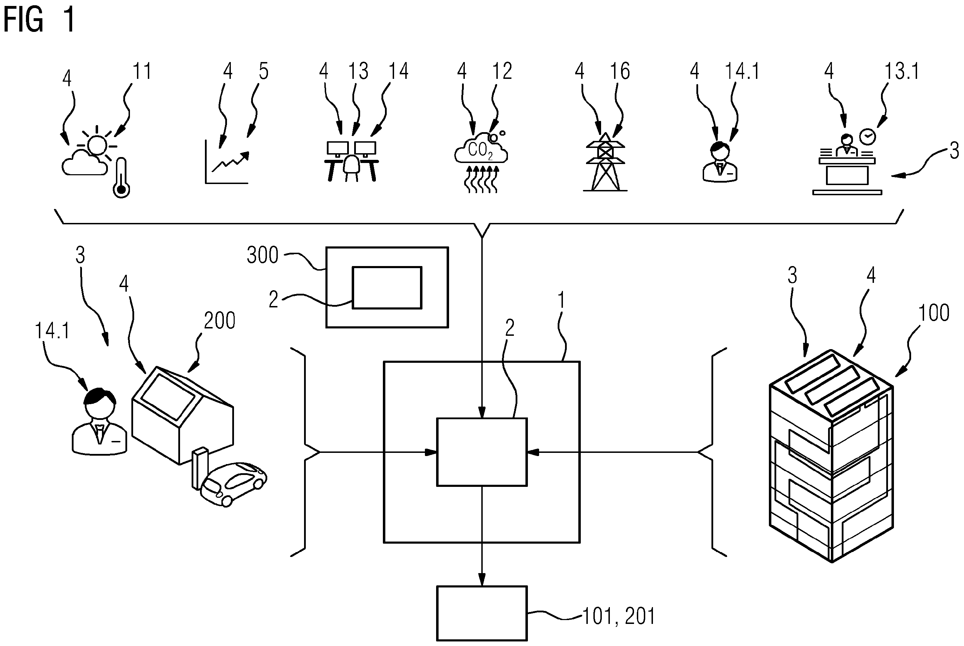

Im Detail zeigt die **Figur 1** rein symbolisch einen Computer 1 und ein auf diesem lauffähig implementiertes Computer-Programm-Produkt 2 zur Durchführung eines Verfahrens zur Erstellung eines zeitlichen Nutzungsplans 101; 201 für Gebäude 100; 200 oder Teile eines Gebäudes 100; 200. Eine handhabbare und handelbare Fassung dieses Computer-Programm-Produkts 2 ist symbolisch auf einem auslesbaren elektronischen Speichermedium 300 abgespeichert dargestellt.

Des Weiteren ist eine beispielhafte schematische Visualisierung für einen nicht vollständig dargestellten Pool 3 verschiedener Parameter 4 gezeigt.

Auf diesen Pool 3 kann bei der Ausführung des Computer-Programm-Produkt 2 zugegriffen und daraus wahlweise unterschiedliche Parametern 4 übernommen werden, um ein Verfahren zur Erstellung eines zeitlichen Nutzungsplans 7 für Gebäude 100; 200 oder Teile eines Gebäudes 100; 200 durchzuführen.

Je nach gewünschtem Schwerpunkt für eine Optimierung der Nutzung und/oder des Betriebs des Gebäudes, wie z.B. $CO_2$-Emmission, Wetterbedingungen, bestimmte Kosten, und/oder gewünschter Komplexität für das durchzuführende Verfahren, z.B. eine Kombination von unterschiedlichen Scherpunkten, kann das Computer-Programm-Produkt 2 mit mindestens einem einzeln und/oder aber auch in einer wahlweisen Kombination mit diesen Parameter 4 gespeist werden.

Der Pool 3 von Parametern 4 umfasst unter anderem folgende, nicht abschließend angeführte, für die Durchführung eines Verfahren zur Erstellung eines zeitlichen Nutzungsplans 101; 201 für Gebäude 100; 200 oder Teile eines Gebäudes 100; 200 zu betrachtende Parameter 4:

- Minimierung der Kosten 5 für Energie 6,
  wie elektrische Energie 6.1, Gas 6.2, Öl 6.3, Fernwärme 6.4,
- Festlegung eines zu betrachtenden Zeitraums 7,
  wie Wochentag 7.1, Vormittag 7.2, Nachmittag 7.3, Mittagszeit 7.4 oder Zeiteinheit 7.5 in Stunden oder Teilen davon,
- Berücksichtigung des für den zu betrachtenden Zeitraum 7 aktuell gültigen oder vorhergesagten Handelspreises 8 für wenigstens eine der Arten 6.1 - 6.4 von Energie 6 ,

- Maximierung des erzielbaren Ertrags 9 aus eigener Einspeisung von Energie 6 in ein Energienetz 10 eines Energieversorgers,
- Berücksichtigung der für den zu betrachtenden Zeitraum 7 zu erwartenden Wetterbedingungen 11,
- Minimierung von CO2-Emissionen 12,
- zeitliche Nutzungspräferenzen 13 des Arbeitgebers 13.1 in dem Falle, dass das Gebäude 100 oder der Teil des Gebäudes 100 ein Büro oder dgl. Firmengebäude ist,
- zeitliche Nutzungspräferenzen 14 mindestens eines der Arbeitnehmer 14.1 in dem Falle, dass das Gebäude 100 oder der Teil des Gebäudes 100 ein Büro oder dgl. Firmengebäude ist,
- zeitliche Nutzungspräferenzen 15 des mindestens einen Arbeitnehmers 14.1 in dem Falle, dass das Gebäude 200 oder der Teil des Gebäudes 200 dessen Wohnort ist,
- Auslastung mindestens eines Energienetzes 16.

Aufgrund der Vielzahl an möglichen Parametern und möglichen Verfahrensschritten sowie der sich daraus ergebenden Komplexität möglicher Verfahrensabläufe lässt sich nicht der gesamte Sachverhalt im Detail in einer einzigen Figur darstellen.

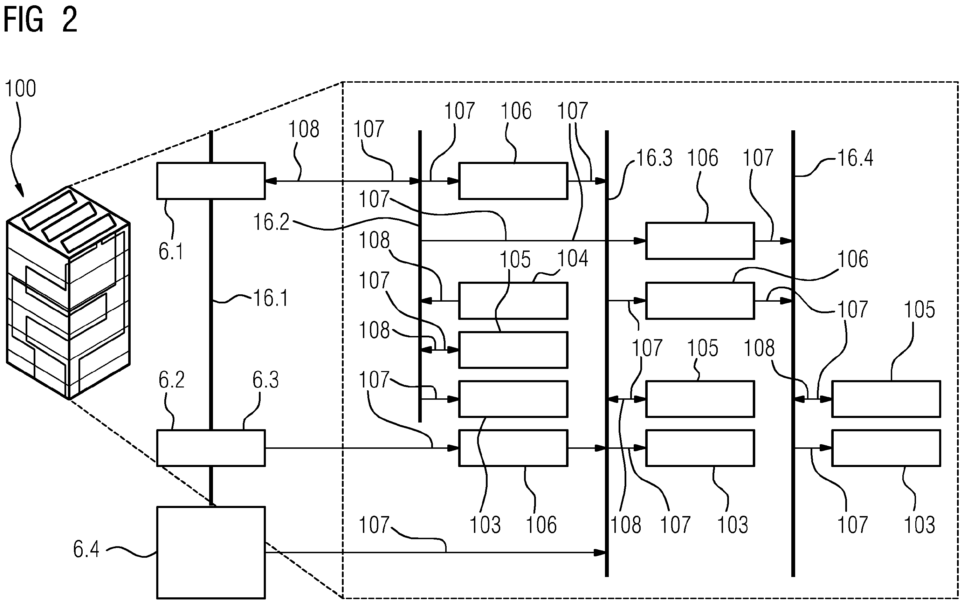

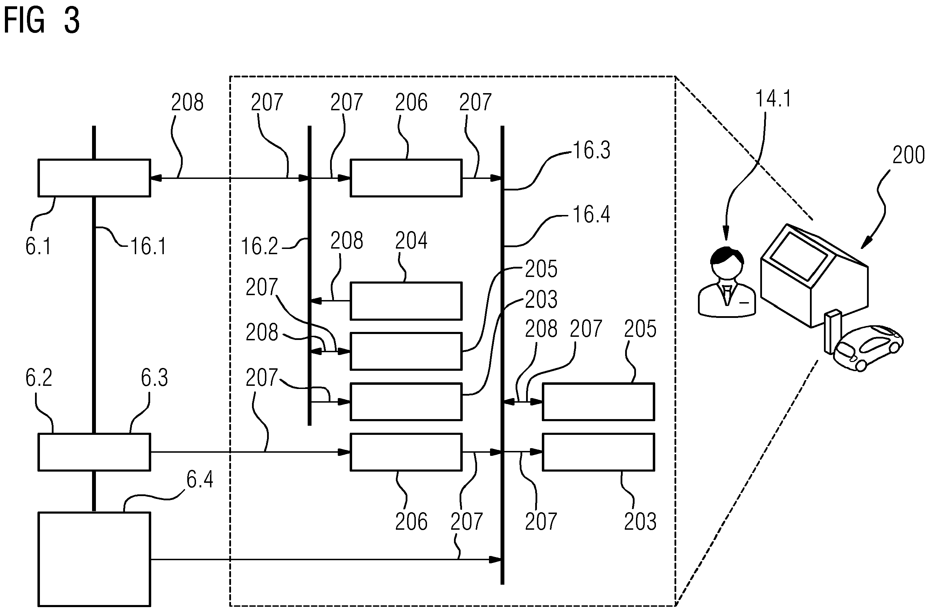

Deshalb wird der wird nun fortfolgend das Verfahren zur Erstellung eines zeitlichen Nutzungsplans 101; 201 für ein Gebäude 100; 200 oder Teile eines Gebäudes 100; 200, den zuvor zur Figur 1 dargelegten Sachverhalt weiterbildend, unter Bezugnahme auf die **Figuren 2 und 3** weiter beschrieben. Dieses Verfahren beinhaltet wenigstens einzelne der folgenden Verfahrensschritte, die bevorzugt durch Ablauf des Computer-Programm-Produkts 2 auf dem Computer 1 gemäß Figur 1 ausgeführt werden können:

- Ermittlung der Nutzungsart 102; 202 des Gebäudes 100; 200, wie zum Beispiel Bürogebäude 100 oder dgl. Firmengebäude 100 oder Wohnort 200 eines Arbeitnehmers 14.1 mit Heimarbeitsplatz,
- Ermittlung der im betreffenden Gebäude 100; 200 vorhandenen oder zu diesem gehörenden Energiesenken 103; 203, Energiequellen 104; 204, Energiespeicher 105; 205 und Energiekonverter 106; 206,
- Ermittlung der üblichen Zeiträume von Nutzung 17 und Nichtnutzung 18 des Gebäudes 100; 200 oder Teilen des Gebäudes 100; 200,
- Ermittlung von möglichen zusätzlichen Zeiträumen einer wenigstens teilweisen Nichtnutzung 19 des Gebäudes 100; 200 oder Teil des Gebäudes 100; 200,
- Ermittlung von Zeiträumen für eine mögliche alternative Nutzung 20 wenigstens von Teilen des Gebäudes 100; 200, wie zu Beispiel Vermietung,
- Ermittlung des Bedarfs 107; 207 und/oder der möglichen Generierung 108; 208 von Energie 6 für zumindest jene Energiesenken 103; 203 und/oder Energiequellen 104; 204 , die als primär erforderlich für eine übliche Nutzung des Gebäudes 100; 200 oder des Teils des Gebäudes 100; 200 für den zu betrachtenden Zeitraum 7 erachtet werden,
- Ermittlung der Menge an Energie 6, welche durch Speicherung mittels der eigenen Energiespeicher 105; 205 für einen separaten, diesbezüglich festlegbaren zweiten Zeitraum 21 generiert werden kann,
- Ermittlung der $CO_2$-Emission 12 für das Gebäude 100; 200 oder den Teil des Gebäudes 100; 200 für den zu betrachtenden ersten Zeitraum 7,
- Ermittlung der Kosten für den Bedarf an Energie 5 und/oder die $CO_2$-Emission 12 für den zu betrachtenden ersten Zeitraum 7,
- Splitten der Kosten für den Bedarf an Energie 5 und/oder die $CO_2$-Emission 12 in fixe Kosten und variable Kosten,
- Optimierung der Nutzung des Gebäudes 100; 200 oder Teile des Gebäudes 100; 200 im Hinblick auf wenigstens einen der Parameter 4.

Zur besseren Übersichtlichkeit sind in den Figuren 2 und 3 alle Leitungen der einzelnen Energienetze 16 für alle Arten von Energie, wie für elektrische Energie 6.1, für Gas.6.2, für Öl.6.3, für Fernwärme 6.4 symbolisch gemeinsam durch eine einzige Leitung 16.1 in einem sogenannten "Busdiagramm" dargestellt.

Die betreffenden Leitungen in den Gebäuden 100; 200 für elektrische Energie 16.2, für Heizung 16.3 und für Kühlung (Klimaanlage) 16.4 sind ebenfalls in der Art eines "Busdiagramms" dargestellt, jedoch von der Energieform her getrennt.

Die Pfeilrichtungen der betreffenden Leitungen zeigen die Richtung des betreffenden Energieflusses an. Ein Pfeil in Richtung zu einer Energiesenke 103; 203, einem Energiespeicher 105; 205 oder einem Energiekonverter 106; 206 symbolisiert einen Energiebedarf. Ein Pfeil in Richtung hin zu der die Energienetzte symbolisierenden Leitung 16 symbolisiert eine Energieabgabe/Energieeinspeisung an/in das betreffende Netz. Dies kann z.B. durch eigene Energiequellen, wie z.B. in der Form einer Photovoltaikanlage oder dergleichen, und/oder durch Abgabe entsprechender Energie aus einem eigenen Energiespeicher 105; 205 erfolgen.

Die Nutzung des Gebäudes 100; 200 oder Teile des Gebäudes 100; 200 kann unter Einbeziehung wenigstens eines weiteren zeitlichen Nutzungsplans 24 für wenigstens ein weiteres Gebäude 200; 100 oder Teile wenigstens eines weiteren Gebäudes 200; 100 optimiert werden. Also z.B. die Nutzung eines betrieblichen Gebäudes 100 unter Berücksichtigung des Nutzungsplans 24 für ein weiteres betrieblich genutztes Gebäude 100 und/oder unter Berücksichtigung des Nutzungsplans 24 für ein Gebäude 200 oder einen Teil eines Gebäudes 200 eines Arbeitnehmers 14.

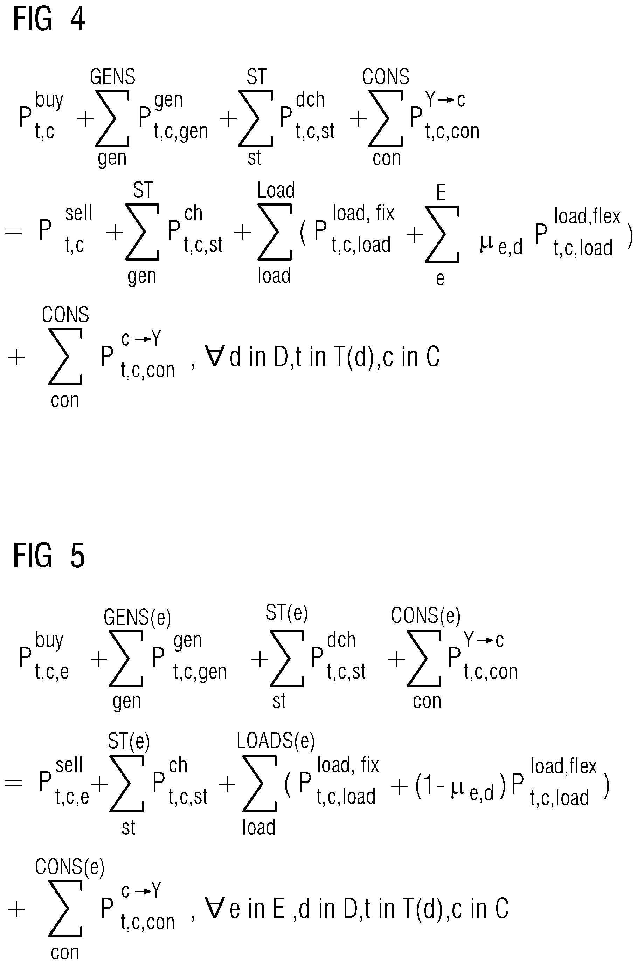

Die **Figur 4** zeigt eine mathematische Formel, die für die Ermittlung des Bedarf 107 an Energie 6 für das Gebäude 100 oder Teile des Gebäudes 100, im dem Fall zugrundegelegt wird, dass dieses Gebäude 100 ein Büro oder dgl. Firmengebäude ist, für jeden zu betrachtenden Zeitraum 7; 7', 7'' und für jede Art 6.1, 6.2, 6.3, 6.4 von zu berücksichtigender Energie 6.

Die **Figur 5** zeigt eine mathematische Formel, die für die Ermittlung des Bedarf an Energie 6 für das Gebäude 200 oder Teile des Gebäudes 200 zugrundegelegt wird, im dem Fall, dass dieses ein Wohnort eines Arbeitnehmers 14.1 mit Heimarbeitsplatz ist, für jeden zu betrachtenden Zeitraum 7, 7', 7'' und für jede Art 6.1, 6.2, 6.3, 6.4 von zu berücksichtigender Energie 6.

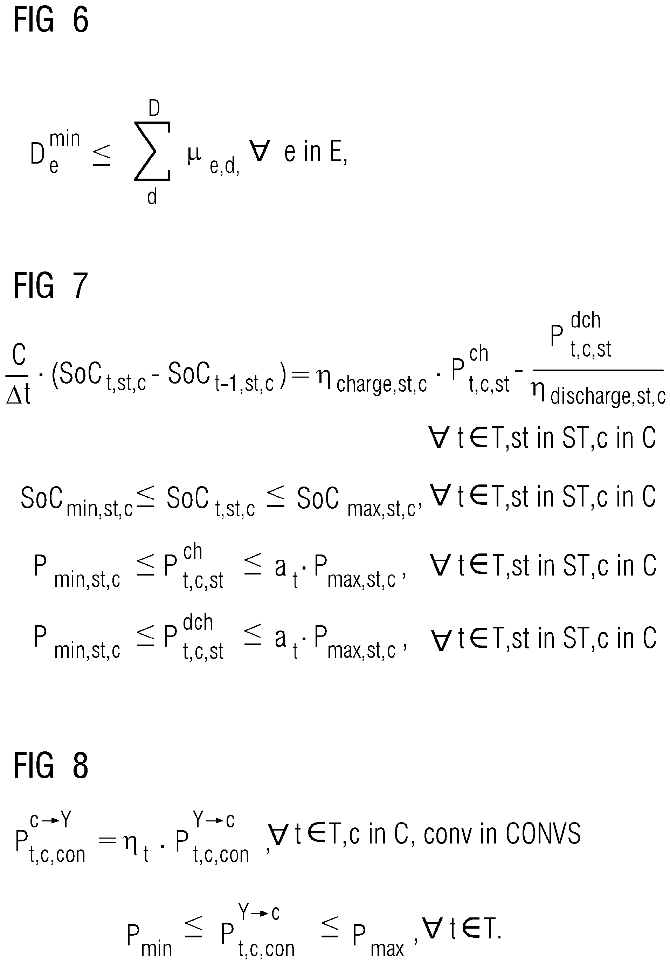

Die **Figur 6** zeigt eine mathematische Formel, die für die Ermittlung eines von einem Arbeitnehmer 14.1 präferenzierten Arbeitstags 14 im Büro oder dgl. Firmengebäude 100 folgende Gleichung zugrundegelegt wird.

Die **Figur 7** zeigt eine mathematische Formel, die für die Speicherung von Energie 6 zugrundegelegt wird.

Die **Figur 8** zeigt eine mathematische Formel, die für eine Konvertierung von Energie 6 zugrundegelegt wird.

Abschließend wird nochmals darauf hingewiesen, dass das Verfahren im Grunde beliebig mit den einzelnen Parametern 4 bis 24 aus dem Pool 3 zur Erstellung eines Nutzungsplans 101; 201 für ein Gebäude 100; 200 oder Teile eines Gebäudes 100; 200 durchgeführt werden kann, um einen Ansatz für eine Optimierung des Betriebe des betreffenden Gebäudes 100; 200 zu ermitteln.

Die Erfindung betrifft somit ein Verfahren zur Erstellung eines zeitlichen Nutzungsplans für ein Gebäude oder Teile eines Gebäudes um dessen Betrieb im Hinblick auf Kosten, CO2-Emissionen, Nutzerpräferenzen von Arbeitgeber und Arbeitnehmer zu optimieren.

Obwohl die Erfindung im Detail durch das Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang des Erfindung zu verlassen.

Bezugszeichenliste

| | |
|---|---|
| 1 | Computer |
| 2 | Computer-Programm-Produkt |
| 3 | Pool |
| 4 | Parameter |
| 5 | Kosten für Energie |
| 6 | Energie |
| 6.1 | Elektrische Energie |
| 6.1f | Faktor |
| 6.2 | Gas |
| 6.2f | Faktor |
| 6.3 | Öl |
| 6.3f | Faktor |
| 6.4 | Fernwärme |
| 6.4f | Faktor |
| 7 | zu betrachtender Zeitraum |
| 7.1 | Wochentag |
| 7.2 | Vormittag |
| 7.3 | Nachmittag |
| 7.4 | Mittagszeit |
| 7.5 | Zeiteinheit in Stunden oder Teilen davon |
| 8 | aktuell gültiger oder vorhergesagter Handelspreis für Energie |
| 9 | Ertrags aus eigener Einspeisung von Energie in ein Energienetz eines Energieversorgers |
| 10 | Energienetz eines Energieversorgers |
| 11 | zu erwartende Wetterbedingungen |
| 12 | $CO_2$-Emissionen |
| 13 | zeitliche Nutzungspräferenzen des Arbeitgebers |
| 13.1 | Arbeitgeber |

| | |
|---|---|
| 14 | zeitliche Nutzungspräferenzen des mindestens einen Arbeitnehmers |
| 14.1 | Arbeitnehmer |
| 15 | zeitliche Nutzungspräferenzen des mindestens einen Arbeitnehmers |
| 16 | Energienetz |
| 16.1 | symbolisches Energienetz für alle Arten von Energie, wie elektrische Energie, Gas, Öl, Fernwärme |
| 16.2 | Leitung für elektrische Energie |
| 16.3 | Leitung für Heizung |
| 16.4 | Leitung für Kühlung (Klimaanlage) |
| 17 | üblicher Zeitraum Nutzung des Gebäudes oder ... |
| 18 | üblicher Zeitraum Nichtnutzung des Gebäudes oder ... |
| 19 | mögliche zusätzlicher Zeitraum Nichtnutzung ... |
| 20 | mögliche alternative Nutzung ... |
| 21 | zweiter Zeitraum |
| 22 | fixe Kosten |
| 23 | variable Kosten |
| 24 | weiterer zeitlicher Nutzungsplan |
| 25 | Zielfunktion |
| 100 | Gebäude |
| 101 | Nutzungsplan für Gebäude oder Teile eines Gebäudes |
| 102 | Nutzungsart des Gebäudes |
| 103 | Energiesenke |
| 104 | Energiequelle |
| 105 | Energiespeicher |
| 106 | Energiekonverter |
| 107 | Bedarf von Energie |
| 108 | Generierung von Energie |
| 200 | Gebäude |
| 201 | Nutzungsplan für Gebäude oder Teile eines Gebäudes |
| 202 | Nutzungsart des Gebäudes |
| 203 | Energiesenke |
| 204 | Energiequelle |
| 205 | Energiespeicher |
| 206 | Energiekonverter |
| 207 | Bedarf von Energie |
| 208 | Generierung von Energie |
| 300 | Auslesbares elektronisches Speichermedium |

**Patentansprüche**

1. Verfahren zur Erstellung eines zeitlichen Nutzungsplans (101; 201) für Gebäude (100; 200) oder Teile eines Gebäudes (100; 200) unter Berücksichtigung mindestens eines vorgebbaren Parameters (4) aus der Menge:

- Minimierung der Kosten (5) für Energie (6),
wie elektrische Energie (6.1), Gas (6.2), Öl (6.3), Fernwärme (6.4),
- Festlegung eines zu betrachtenden Zeitraums (7),
wie Wochentag (7.1), Vormittag (7.2), Nachmittag (7.3), Mittagszeit (7.4) oder Zeiteinheit (7.5) in Stunden oder Teilen davon,
- Berücksichtigung des für den zu betrachtenden Zeitraum (7) aktuell gültigen oder vorhergesagten Handelspreises (8) für wenigstens eine der Arten (6.1, 6.2, 6.3, 6.4) von Energie (6),
- Maximierung des erzielbaren Ertrags (9) aus eigener Einspeisung von Energie (6) in ein Energienetz (16) eines Energieversorgers,
- Berücksichtigung der für den zu betrachtenden Zeitraum (7) zu erwartenden Wetterbedingungen (11),
- Optimierung der Nutzung mindestens eines der Energienetze (16) der Energieversorger,
- Minimierung von $CO_2$-Emissionen (12),
- zeitliche Nutzungspräferenzen (13) des Arbeitgebers (13.1) in dem Falle, dass das Gebäude (100) oder der Teil des Gebäudes (100) ein Büro oder dgl. Firmengebäude ist,
- zeitliche Nutzungspräferenzen (14) mindestens eines der Arbeitnehmer (14.1) in dem Falle, dass das Gebäude (100) oder der Teil des Gebäudes (100) ein Büro oder dgl. Firmengebäude ist,

- zeitliche Nutzungspräferenzen (15) des mindestens einen Arbeitnehmers (14.1) in dem Falle, dass das Gebäude (200) oder der Teil des Gebäudes (200) dessen Wohnort ist,
- Auslastung mindestens eines Energienetzes (16),

wobei das Verfahren wenigstens einzelne der folgenden Verfahrensschritte beinhaltet:

- Ermittlung der Nutzungsart (102; 202) des Gebäudes (100; 200), wie zum Beispiel Bürogebäude oder dgl. Firmengebäude oder Wohnort eines Arbeitnehmers mit Heimarbeitsplatz,
- Ermittlung der im betreffenden Gebäude (100; 200) vorhandenen oder zu diesem gehörenden Energiesenken (103; 203), Energiequellen(104; 204), Energiespeicher (105; 205)und Energiekonverter (106; 206),
- Ermittlung der üblichen Zeiträume von Nutzung (17) und Nichtnutzung (18) des Gebäudes (100; 200) oder Teilen des Gebäudes (100; 200),
- Ermittlung von möglichen zusätzlichen Zeiträumen einer wenigstens teilweisen Nichtnutzung (19) des Gebäudes (100; 200) oder Teil des Gebäudes (100; 200),
- Ermittlung von Zeiträumen für eine mögliche alternative Nutzung (20) wenigstens von Teilen des Gebäudes (100; 200), wie zu Beispiel Vermietung,
- Ermittlung des Bedarfs (107) und/oder der möglichen Generierung (108) von Energie (6) für zumindest jene Energiesenken (103; 203) und/oder Energiequellen (104; 204), die als primär erforderlich für eine übliche Nutzung des Gebäudes (100; 200) oder des Teils des Gebäudes (100; 200) für den zu betrachtenden Zeitraum (7) erachtet werden,
- Ermittlung der Menge an Energie (6), welche durch Speicherung mittels der eigenen Energiespeicher (105; 205) für einen separaten, diesbezüglich festlegbaren zweiten Zeitraum (21) generiert werden kann,
- Ermittlung der $CO_2$-Emission (12) für das Gebäude (100; 200) oder den Teil des Gebäudes (100; 200) für den zu betrachtenden ersten Zeitraum (7),
- Ermittlung der Kosten (5) für den Bedarf (107; 207) an Energie (6) und/oder die $CO_2$-Emission (12) für den zu betrachtenden ersten Zeitraum (7),
- Splitten der Kosten (5) für den Bedarf (107; 207) an Energie (6) und/oder die $CO_2$-Emission (12) in fixe Kosten (22) und variable Kosten (23),
- Optimierung der Nutzung des Gebäudes (100; 200) oder Teile des Gebäudes (100; 200) im Hinblick auf wenigstens einen der Parameter (4).

2. Verfahren nach Anspruch 1, **dadurch gekennzeichnet, dass** die Nutzung des Gebäudes (100; 200) oder Teile des Gebäudes (100; 200) unter Einbeziehung wenigstens eines weiteren zeitlichen Nutzungsplans (24) für wenigstens ein weiteres Gebäude (200; 100) oder Teile wenigstens eines weiteren Gebäudes (200; 100) optimiert wird.

3. Verfahren nach Anspruch 1 oder 2, **dadurch gekennzeichnet, dass** die messbaren Parameter (6.1, 6.2, 6.3, 6.4) des Gebäudes (100; 200) oder des Teils des Gebäudes (100; 200) über einen mit dem zu betrachtenden Zeitraum (7) vergleichbaren Zeitraum (7') gemessen und abrufbar bereitgestellt werden.

4. Verfahren nach einem der Ansprüche 1 bis 3, **dadurch gekennzeichnet, dass** die messbaren Parameter (6.1, 6.2, 6.3, 6.4) des Gebäudes (100; 200) oder des Teils des Gebäudes (100; 200) in dem zu betrachtenden Zeitraum (7) gemessen und abrufbar bereitgestellt werden.

5. Verfahren nach einem der Ansprüche 1 bis 4, **dadurch gekennzeichnet, dass** die gemessenen und/oder bereitgestellten Parameter (6.1, 6.2, 6.3, 6.4) mit ihnen zugeordneten Faktoren (6.1f, 6.2f, 6.3f, 6.4f) verknüpft werden.

6. Verfahren nach einem der Ansprüche 1 bis 5, **dadurch gekennzeichnet, dass** die Faktoren (6.1f, 6.2f, 6.3f, 6.4f) für unterschiedliche zu betrachtende Zeiträume (7, 7', 7") differenziert berücksichtigt werden.

7. Verfahren nach einem der Ansprüche 1 bis 6, **dadurch gekennzeichnet, dass**, bezogen auf das Energienetz (16) des betreffenden Energieversorgers, zu Niedrigpreiszeiten und/oder Niederlastzeiten daraus Energie (6) zur Aufladung eigener Energiespeicher (105; 205) bezogen wird.

8. Verfahren nach einem der Ansprüche 1 bis 7, **dadurch gekennzeichnet, dass**, bezogen auf das Energienetz (16) des betreffenden Energieversorgers, zu Hochpreiszeiten und/oder Spitzenlastzeiten überschüssige Energie aus den eigenen Speichern (105; 205) in das Energienetz (16) eingespeist wird.

9. Verfahren nach einem der Ansprüche 1 bis 8, **dadurch gekennzeichnet, dass** die Optimierung der Nutzung des Gebäudes (100; 200) oder Teile des Gebäudes (100; 200) als eine Zielfunktion (25) eines Rechenalgorithmus berechnet wird, welcher gemischte Integer-Linearfunktionen umfasst.

**10.** Verfahren nach einem der Ansprüche 1 bis 9, **dadurch gekennzeichnet, dass** für die Ermittlung des Bedarf (107) an Energie (6) für das Gebäude (100) oder Teile des Gebäudes (100), im dem Fall, dass dieses Gebäude (100) ein Büro oder dgl. Firmengebäude ist, für jeden zu betrachtenden Zeitraum (7; 7', 7") und für jede Art (6.1, 6.2, 6.3, 6.4) von zu berücksichtigender Energie (6) folgende Gleichung zugrundegelegt wird:

$$P_{t,c}^{buy} + \sum_{gen}^{GENS} P_{t,c,gen}^{gen} + \sum_{st}^{ST} P_{t,c,st}^{dch} + \sum_{con}^{CONS} P_{t,c,con}^{Y \to c}$$
$$= P_{t,c}^{sell} + \sum_{gen}^{ST} P_{t,c,st}^{ch} + \sum_{load}^{Load} (P_{t,c,load}^{load.fix} + \sum_{e}^{E} \mu_{e,d} P_{t,c,load}^{load.flex})$$
$$+ \sum_{con}^{CONS} P_{t,c,con}^{c \to Y}, \forall\, d\ in\ D, t\ in\ T(d), c\ in\ C,$$

**11.** Verfahren nach einem der Ansprüche 1 bis 10, **dadurch gekennzeichnet, dass** für die Ermittlung des Bedarf an Energie (6) für das Gebäude (200) oder Teile des Gebäudes (200), im dem Fall, dass dieses ein Wohnort eines Arbeitnehmers (14.1) mit Heimarbeitsplatz ist, für jeden zu betrachtenden Zeitraum (7, 7', 7") und für jede Art (6.1, 6.2, 6.3, 6.4) von zu berücksichtigender Energie (6) folgende Gleichung zugrundegelegt wird:

$$P_{t,c,e}^{buy} + \sum_{gen}^{GENS(e)} P_{t,c,gen}^{gen} + \sum_{st}^{ST(e)} P_{t,c,st}^{dch} + \sum_{con}^{CONS(e)} P_{t,c,con}^{Y \to c}$$
$$= P_{t,c,e}^{sell} + \sum_{st}^{ST(e)} P_{t,c,st}^{ch} + \sum_{load}^{LOADS(e)} (P_{t,c,load}^{load.fix} + (1 - \mu_{e,d}) P_{t,c,load}^{load.flex})$$
$$+ \sum_{con}^{CONS(e)} P_{t,c,con}^{c \to Y}, \forall\, e\ in\ E, d\ in\ D, t\ in\ T(d), c\ in\ C.$$

**12.** Verfahren nach einem der Ansprüche 1 bis 11, **dadurch gekennzeichnet, dass** für die Ermittlung eines von einem Arbeitnehmer (14.1) präferenzierten Arbeitstag (14) im Büro oder dgl. Firmengebäude (100) folgende Gleichung zugrundegelegt wird:

$$D_e^{min} \le \sum_{d}^{D} \mu_{e,d}, \forall\, e\ in\ E,$$

**13.** Verfahren nach einem der Ansprüche 1 bis 12, **dadurch gekennzeichnet, dass** für die Speicherung von Energie (6) folgende Bedingung zugrundegelegt wird:

$$\frac{C}{\Delta t} \cdot \left( SoC_{t,st,c} - SoC_{t-1,st,c} \right) = \eta_{charge,st,c} \cdot P^{ch}_{t,c,st} - \frac{P^{dch}_{t,c,st}}{\eta_{discharge,st,c}}, \quad \forall\, t \in T, st\ in\ ST, c\ in\ C$$

$$SoC_{min,st,c} \leq SoC_{t,st,c} \leq SoC_{max,st,c}, \quad \forall\, t \in T, st\ in\ ST, c\ in\ C$$

$$P_{min,st,c} \leq P^{ch}_{t,c,st} \leq a_t \cdot P_{max,st,c}, \quad \forall\, t \in T, st\ in\ ST, c\ in\ C$$

$$P_{min,st,c} \leq P^{dch}_{t,c,st} \leq a_t \cdot P_{max,st,c}, \quad \forall\, t \in T, st\ in\ ST, c\ in\ C$$

**14.** Verfahren nach einem der Ansprüche 1 bis 13, **dadurch gekennzeichnet, dass** für eine Konvertierung von Energie (6) folgende Bedingung zugrundegelegt wird:

$$P^{c \to Y}_{t,c,con} = \eta_t \cdot P^{Y \to c}_{t,c,con}, \quad \forall\, t \in T, c\ in\ C, conv\ in\ CONVS$$

$$P_{min} \leq P^{Y \to c}_{t,c,con} \leq P_{max}, \quad \forall\, t \in T.$$

**15.** Computer-Programm-Produkt (2), **dadurch gekennzeichnet, dass** es dazu programmiert ist, bei seinem Ablauf auf einem Computer (1) ein Verfahren zur Erstellung eines zeitlichen Nutzungsplans (101; 201) für Gebäude (100; 200) oder Teile eines Gebäudes (100; 200) nach einem der vorangehenden Ansprüche durchzuführen.

**16.** Computer umfassend eine Hardware und darauf laufende Software, **dadurch gekennzeichnet, dass** auf dem Computer (1) ein Computer-Programm-Produkt (2) nach Anspruch 15 lauffähig implementiert ist.

**17.** Auslesbares elektronisches Speichermedium (300), **dadurch gekennzeichnet, dass** in dem auslesbaren elektronischen Speichermedium (300) ein Computer-Programm-Produkt (2) nach Anspruch 15 gespeichert ist.

FIG 1

EP 4 502 892 A1

FIG 2

EP 4 502 892 A1

FIG 3

## FIG 4

$$P_{t,c}^{buy} + \sum_{gen}^{GENS} P_{t,c,gen}^{gen} + \sum_{st}^{ST} P_{t,c,st}^{dch} + \sum_{con}^{CONS} P_{t,c,con}^{Y \to c}$$

$$= P_{t,c}^{sell} + \sum_{gen}^{ST} P_{t,c,st}^{ch} + \sum_{load}^{Load} ( P_{t,c,load}^{load, fix} + \sum_{e}^{E} \mu_{e,d} P_{t,c,load}^{load,flex} )$$

$$+ \sum_{con}^{CONS} P_{t,c,con}^{c \to Y} , \forall d \text{ in } D, t \text{ in } T(d), c \text{ in } C$$

## FIG 5

$$P_{t,c,e}^{buy} + \sum_{gen}^{GENS(e)} P_{t,c,gen}^{gen} + \sum_{st}^{ST(e)} P_{t,c,st}^{dch} + \sum_{con}^{CONS(e)} P_{t,c,con}^{Y \to c}$$

$$= P_{t,c,e}^{sell} + \sum_{st}^{ST(e)} P_{t,c,st}^{ch} + \sum_{load}^{LOADS(e)} ( P_{t,c,load}^{load, fix} + (1- \mu_{e,d}) P_{t,c,load}^{load,flex} )$$

$$+ \sum_{con}^{CONS(e)} P_{t,c,con}^{c \to Y} , \forall e \text{ in } E , d \text{ in } D, t \text{ in } T(d), c \text{ in } C$$

## FIG 6

$$D_e^{min} \leq \sum_d^D \mu_{e,d,} \quad \forall \ e \ in \ E,$$

## FIG 7

$$\frac{C}{\Delta t} \cdot (SoC_{t,st,c} - SoC_{t-1,st,c}) = \eta_{charge,st,c} \cdot P_{t,c,st}^{ch} - \frac{P_{t,c,st}^{dch}}{\eta_{discharge,st,c}}$$

$$\forall \ t \in T, st \ in \ ST, c \ in \ C$$

$$SoC_{min,st,c} \leq SoC_{t,st,c} \leq SoC_{max,st,c}, \quad \forall \ t \in T, st \ in \ ST, c \ in \ C$$

$$P_{min,st,c} \leq P_{t,c,st}^{ch} \leq a_t \cdot P_{max,st,c}, \quad \forall \ t \in T, st \ in \ ST, c \ in \ C$$

$$P_{min,st,c} \leq P_{t,c,st}^{dch} \leq a_t \cdot P_{max,st,c}, \quad \forall \ t \in T, st \ in \ ST, c \ in \ C$$

## FIG 8

$$P_{t,c,con}^{c \to Y} = \eta_t \cdot P_{t,c,con}^{Y \to c}, \quad \forall \ t \in T, c \ in \ C, \ conv \ in \ CONVS$$

$$P_{min} \leq P_{t,c,con}^{Y \to c} \leq P_{max}, \quad \forall \ t \in T.$$

Europäisches Patentamt
European Patent Office
Office européen des brevets

**Nummer der Anmeldung**

**EP 23 18 8978**

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2014/124353 A1 (SIEMENS AG [DE]; SIEMENS CORP [US]) 14. August 2014 (2014-08-14) * Absatz [0003] – Absatz [0045] * * Abbildungen 1-9 * | 1-17 | INV. G06Q10/0631 G06Q50/06 G06Q50/16 F24F11/46 |
| A | WO 2011/072332 A1 (COMMW SCIENT IND RES ORG [AU]; WARD JOHN [AU] ET AL.) 23. Juni 2011 (2011-06-23) * Absatz [0025] – Absatz [0130] * | 1-17 | ADD. G06Q30/0201 G05B19/00 |
| A | EP 2 325 707 A1 (ZEROGROUP HOLDING OUE [EE]) 25. Mai 2011 (2011-05-25) * Absatz [0030] – Absatz [0076] * | 1-17 | |

**RECHERCHIERTE SACHGEBIETE (IPC)**

G06Q
F24F
G05B

Der vorliegende Recherchenbericht wurde für alle Patentansprüche erstellt

| Recherchenort | Abschlußdatum der Recherche | Prüfer |
|---|---|---|
| München | 17. Januar 2024 | Ghomrasseni, Z |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**   EP 23 18 8978

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-01-2024

| Im Recherchenbericht angeführtes Patentdokument | Datum der Veröffentlichung | Mitglied(er) der Patentfamilie | Datum der Veröffentlichung |
|---|---|---|---|
| WO 2014124353 A1 | 14-08-2014 | BR 112015018526 A2 | 18-07-2017 |
| | | CA 2900767 A1 | 14-08-2014 |
| | | CN 104969133 A | 07-10-2015 |
| | | EP 2954377 A1 | 16-12-2015 |
| | | MX 343533 B | 08-11-2016 |
| | | WO 2014124353 A1 | 14-08-2014 |
| WO 2011072332 A1 | 23-06-2011 | AU 2010333708 A1 | 02-08-2012 |
| | | BR 112012014622 A2 | 14-05-2019 |
| | | CN 102812303 A | 05-12-2012 |
| | | EP 2513568 A1 | 24-10-2012 |
| | | JP 5663596 B2 | 04-02-2015 |
| | | JP 2013514510 A | 25-04-2013 |
| | | KR 20120123335 A | 08-11-2012 |
| | | US 2012259469 A1 | 11-10-2012 |
| | | US 2016327295 A1 | 10-11-2016 |
| | | WO 2011072332 A1 | 23-06-2011 |
| EP 2325707 A1 | 25-05-2011 | EP 2325707 A1 | 25-05-2011 |
| | | RU 2012124324 A | 27-12-2013 |
| | | US 2012239603 A1 | 20-09-2012 |
| | | WO 2011061322 A1 | 26-05-2011 |

EPO FORM P0461

Für nähere Einzelheiten zu diesem Anhang : siehe Amtsblatt des Europäischen Patentamts, Nr.12/82